# EUROPÄISCHE PATENTANMELDUNG

(11) **EP 1 235 011 A1**
(43) Veröffentlichungstag der Anmeldung: **28.08.2002**
(21) Anmeldenummer: 02003080.5
(22) Anmeldetag: 13.02.2002
(51) Int. Cl.: F16J 15/46, E06B 7/23, F16L 55/128

(54) **Dichtungsvorrichtung**

(30) Priorität: 20.02.2001 DE 20103010 U
(71) Anmelder: Giebel, Horst, 85077 Manching (DE)
(72) Erfinder: Giebel, Horst, 85077 Manching (DE)
(74) Vertreter: Sasse, Volker, Dipl.-Ing.

(57) **Zusammenfassung**

Eine Dichtungsvorrichtung (1) dient zum innenseitigen Abdichten von Rohrleitungen bzw. Gebäudeöffnungen (2). Die Dichtungsvorrichtung weist hierzu eine Felge (8) auf, die innenseitig von einer Platte (5) verschlossen ist. Auf der Felge (8) ist ein Schlauch (9) mit ringförmiger Wandung aus elastomerem Material aufgezogen, der einen geschlossenen, mit Gas füllbaren Hohlraum einschließt. Um zu erreichen, daß sich der Schlauch (9) beim Füllen mit komprimiertem Gas im wesentlichen nur in Radialrichtung ausdehnt, weist die Schlauchwandung ausschließlich im Radialbereich eine Verstärkung mit erhöhter Zugfestigkeit auf. Um mehrere Dichtungsvorrichtungen unmittelbar aneinandersetzen zu können, ist außerdem vorgesehen, daß die Dichtungsvorrichtung eine Gegendruckplatte (14) aufweist. Der Schlauch (9) preßt sich dabei einerseits gegen die Felge (8) und andererseits gegen die Gegendruckplatte (14).

## Beschreibung

Die Erfindung betrifft eine Dichtungsvorrichtung gemäß dem Oberbegriff des Patentanspruchs 1.

Aus der DE 44 37 909 A1 ist ein Abdichteinsatz für Gebäudeöffnungen bekannt, der aus einer massiven Platte besteht. An dieser Platte ist eine Felge gehalten, die einen ringförmigen Schlauch aus elastomerem Material hält. Dieser Schlauch ist mit komprimierter Luft füllbar, so daß er sich radial nach außen erweitert und damit gegen die Innenseite der Gebäudeöffnung drückt. Auf diese Weise kann die Gebäudeöffnung wasserdicht verschlossen werden, um einer Überflutung des Gebäudeinnenraums bei Hochwasser vorzubeugen. Allerdings muß die Felge sehr genau an die Form der Gebäudeöffnung angepaßt werden, damit der elastomere Schlauch ausreichend sicher geführt ist. Bei zu kurz dimensionierter Felge besteht die Gefahr, daß sich der Schlauch während des Füllens mit Druckluft um das freie Ende der Felge legt und keine genügende Anpreßkraft an der Gebäudeöffnungswandung erzielt. Außerdem besteht in diesem Fall die Gefahr, daß der Schlauch durch das freie Ende der Felge zerstört werden könnte.

Der Erfindung liegt die Aufgabe zugrunde, eine Dichtungsvorrichtung zu schaffen, die ein Abdichten von Rohrleitungen bzw. Gebäudeöffnungen mit unterschiedlichen Innenabmessungen ermöglicht.

Diese Aufgabe wird erfindungsgemäß mit den Merkmalen des Patentanspruchs 1 gelöst.

Die Dichtungsvorrichtung gemäß Anspruch 1 weist zum Ausgleich der Innenabmessungen der Rohrleitungen bzw. Gebäudeöffnungen einen elastomeren Schlauch mit ringförmiger Wandung auf. In der Praxis hat sich herausgestellt, daß ein Ausgleich des Durchmessers bzw. der Breite in der Größenordnung von ca. 10 cm erforderlich ist, um unterschiedlich geformte Gebäudeöffnungen bzw. mit Ablagerungen versehene Rohrleitungen sicher abdichten zu können. Um zu verhindern, daß sich der Schlauch über eine ggf. vorhandene Felge stülpt, ist vorgesehen, daß die Schlauchwandung im Bereich ihrer zur Ringinnen- bzw. -außenseite gerichteten Fläche eine größere Elastizität als in einem sich im wesentlichen radial zur Ringebene erstreckenden Bereich aufweist. Dies wird erfindungsgemäß dadurch erreicht, daß im radialen Bereich am Schlauch eine Verstärkung aus einem zugfesten Material vorgesehen ist. Diese Verstärkung sorgt für eine Stabilisierung der Form des Schlauches im verstärkten Bereich. Diese Verstärkungsbereiche des Schlauchs gewährleisten, daß sich der Schlauch beim Füllen mit Druckluft bevorzugt an den elastischeren Bereichen radial zur Ringebene ausdehnt. Damit nimmt der Schlauch - im Querschnitt betrachtet - mit zunehmendem Innendruck eine eliptische bzw. ovale Form an, ohne zu seitlichen Ausstülpungen zu neigen. Damit kann eine Felge, auf der der Schlauch aufgezogen ist, entsprechend verkürzt werden, ohne daß die Gefahr besteht, daß sich der Schlauch über das freie Ende der Felge stülpen könnte. Damit kann der Schlauch sehr einfach den gewünschten Längen- bzw. Durchmesserausgleich erzielen, um unterschiedlich dimensionierte Rohrleitungen bzw. Gebäudeöffnungen korrekt abdichten zu können.

Um eine möglichst optimale Anpassung der Dichtungsvorrichtung an die Innenfläche der Rohrleitung bzw. der Gebäudeöffnung zu erzielen, ist es gemäß Anspruch 2 günstig, den Schlauch mit einem im entspannten Zustand im wesentlichen rechteckförmigen Querschnitt auszubilden. Ggf. könnte im Übergangsbereich zwischen der radialen und der axialen Fläche eine Rundung vorgesehen sein. Alternativ ist es vorteilhaft, einen elliptischen bzw. ovalen Schlauchquerschnitt vorzusehen, um eine gute Anpassung an eine teiltorusförmige Felge zu erzielen. Die Längsseite des Querschnitts der Schlauchwandung ist zur Ringinnenseite gerichtet, so daß sich ein besonders großer Anpaßbereich der Dichtungsvorrichtung an unterschiedliche Innenabmessungen der Rohrleitung bzw. Gebäudeöffnung ergibt. Beim Füllen des Schlauches mit komprimiertem Gas nimmt dieser im Querschnitt eine zunehmend ovale Form an, ohne daß die Gefahr besteht, daß sich dieser über eine ggf. vorhandene Felge seitlich überstülpt.

Zur einfachen Realisierung der gewünschten geringeren Elastizität im Bereich der Ringinnen- bzw. -außenseit:e des Schlauches ist es gemäß Anspruch 3 günstig, diese Flächen mit geringerer Wandstärke bzw. geringerer Shorehärte auszubilden. Eine geringere Wandstärke kann sehr einfach durch eine entsprechende Ausbildung der Formwerkzeuge realisiert werden. Alternativ oder zusätzlich ist es auch vorstellbar, im Radialbereich am Schlauch eine zusätzliche Schicht aus elastomeren Material anzuvulkanisieren. Dieses könnte ggf. eine größere Shorehärte aufweisen, um den Unterschied der Elastizitäten des Schlauches zwischen dem radialen und dem Innen- bzw. außenseitigen Bereich weiter zu erhöhen.

Gemäß Anspruch 4 wird die Verstärkung vorteilhaft von Glas-, Karbon- bzw. Textilfasern gebildet. Diese lassen sich sehr leicht biegen und damit der Form des Schlauches anpassen, wobei sie trotzdem eine sehr hohe Zugfestigkeit aufweisen. Damit ergibt sich mit diesen Fasern eine besonders gute Formstabilität des Schlauches gegenüber Dehnungen, wobei eine ausreichende Biegsamkeit des Schlauches auch im verstärkten Bereich aufrechterhalten bleibt.

Um beim Füllen des Schlauches mit komprimiertem Gas eine möglichst gute Formstabilität im Bereich der Verstärkung zu erzielen, ist es gemäß Anspruch 5 günstig, wenn sich die Fasern im wesentlichen radial zur Ringebene erstrekken. In dieser Richtung wirkt die Zugkraft des elastomeren Materials am stärksten, so daß die Fasern in diesem Fall die bestmögliche Stabilisierung erzielen. Alternativ ist es auch vorstellbar, die Fasern zu einem Geflecht zu formen, das in allen Richtungen eine ausreichende Zugstabilität aufweist.

Zur Erzielung einer möglichst dichten Verbindung zwischen dem Schlauch und der Rohrleitung bzw. der Gebäudeöffnung ist es gemäß Anspruch 6 günstig, an der Ringaußenseite der Schlauchwandung mindestens einen Dichtstreifen anzubringen. Dieser Dichtstreifen weist eine geringere Shorehärte als die Schlauchwandung auf, so daß sich der Dichtstreifen auch einer rauhen Oberfläche gut anpassen kann. Dies ist insbesondere bei gemauerten Gebäudeöffnungen bzw. bei mit Ablagerungen versehenen Rohrleitungen wichtig.

Um den Schlauch mit komprimiertem Gas füllen zu können, weist dieser ein Ventil auf. Grundsätzlich kann dieses Ventil an jeder beliebigen Stelle des Schlauches vorgesehen sein, sofern es die Dichtwirkung gegenüber dem Rohr bzw. der Gebäudeöffnung nicht beeinträchtigt. Gemäß Anspruch 7 ist es jedoch vorteilhaft, wenn das Ventil im sich radial zur Ringebene erstreckenden Bereich des Schlauchs vorgesehen ist. Damit kann der Schlauch auf seiner gesamten Länge vollflächig auf der Felge aufliegen. Außerdem befindet sich das Ventil in diesem Fall in einem steiferen Bereich des Schlauches, wobei das Ventil sehr leicht zugänglich ist.

Ist die Gebäudeöffnung bzw. die Rohrleitung so groß, daß sie von einer einzelnen Dichtungsvorrichtung nicht vollständig verschlossen werden kann, so müssen grundsätzlich mehrere Dichtungsvorrichtungen neben- bzw. übereinander vorgesehen werden. Dies ist jedoch nachteilig, da in diesem Fall zwei elastomere Schläuche gegeneinander gedrückt werden müssen. Dies führt trotz einer ggf. vorhandenen Verstärkung im radialen Bereich zu einem gegenseitigen axialen Verschieben der Dichtungsvorrichtungen, was die Dichtwirkung der gesamten Anordnung erheblich beeinträchtigen würde. Zur Behebung dieses Problems ist gemäß Anspruch 8 vorgesehen, an einer Felge bzw. an einer diese verschließenden Platte eine den Schlauch außenseitig übergreifende Gegendruckplatte zu halten. In diesem Bereich drückt somit der Schlauch einerseits gegen die Felge und andererseits gegen die Gegendruckplatte, so daß sich keinerlei Dichtigkeitsproblem ergibt. Eine weitere Dichtungsvorrichtung kann in diesem Fall problemlos an die Gegendruckplatte angesetzt werden, die ein direktes Anliegen zweier Schläuche aneinander verhindert.

Um die Gebäudeöffnung bzw. Rohrleitung auch im Bereich der Stirnseiten der Gegendruckplatte ausreichend sicher abzudichten, ist es gemäß Anspruch 9 vorteilhaft, wenn an der Gegendruckplatte stirnseitig mindestens ein Dichtungskörper vorgesehen ist. Vorzugsweise ist an beiden einander gegenüberliegenden, zur Gebäudeöffnung bzw. zur Rohrleitung gerichteten Stirnflächen jeweils ein Dichtungskörper vorgesehen, um eine allseitige Dichtung zu gewährleisten.

Um eine gute Dichtwirkung des zusätzlichen Dichtkörpers zu gewährleisten, ist es gemäß Anspruch 10 günstig, den Dichtkörper aus elastomerem Material herzustellen. Der Dichtkörper besitzt eine möglichst geringe Shorehärte, um eine Längenanpassung an die Gebäudeöffnung bzw. Rohrleitung zu gewährleisten. Vorzugsweise besitzt der Dichtungskörper bei einer Länge von ca. 2,5 cm eine Shorehärte von nicht mehr als 10. Bei entsprechend länger ausgebildetem Dichtungskörper kann die Shorehärte entsprechend erhöht werden, ohne daß die gewünschte Längenanpaßbarkeit verloren ginge. Der Dichtungskörper ist dabei derart angeordnet, daß er durch den Schlauch komprimierbar ist. Dies hat den Vorteil, daß sich der Dichtungskörper beim Aufpumpen des Schlauches stärker gegen die Gebäudeöffnung bzw. Rohrleitung preßt.

Der Erfindungsgegenstand wird beispielhaft anhand der Zeichnung erläutert, ohne den Schutzumfang zu beschränken.

Es zeigt
- Figur 1: einen Türholm mit eingesetzten Dichtungsvorrichtungen,
- Figur 2: eine räumliche Darstellung eines Schlauches zum Abdichten einer Rohrleitung,
- Figur 3: eine Schnittdarstellung durch einen Schlauch im entspannten Zustand,
- Figur 4: den Schlauch gemäß Figur 3 unter Druckbeaufschlagung,
- Figur 5: eine Schnittdarstellung durch eine alternative Ausführungsform eines Schlauches und
- Figur 6: eine Schnittdarstellung durch eine weitere alternative Ausführungsform eines Schlauches.

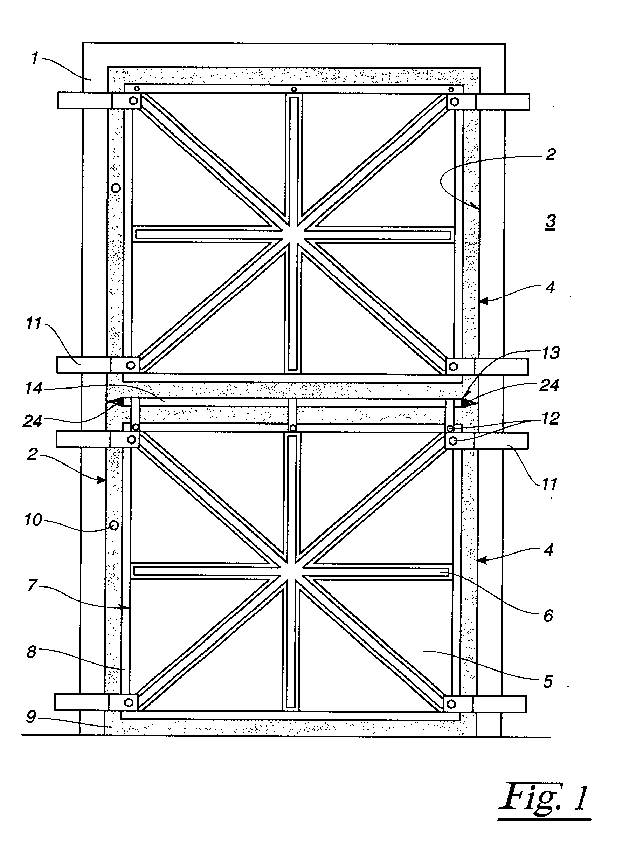

Figur 1 zeigt einen Türholm 1, der eine Öffnung 2 eines Gebäudes 3 einschließt. Um das Gebäude 3 bei akuter Hochwassergefahr vor einer Überschwemmung zu schützen, sind in die Gebäudeöffnung 2 zwei Dichtungsvorrichtungen 4 eingesetzt, die die Gebäudeöffnung 2 dicht verschließen. Die beiden Dichtungsvorrichtungen 4 sind im wesentlichen gleich aufgebaut und werden im folgenden näher erläutert.

Die Dichtungsvorrichtung 4 besteht aus einer Platte 5, die durch eine Anzahl Verstrebungen 6 versteift ist. Diese Verstrebungen 6 können aus gesonderten, mit der Platte 5 verbundenen Leisten bestehen. Alternativ ist es auch vorstellbar, die Verstrebungen 6 in Form von Sicken auszubilden, so daß diese einstückig mit der Platte 5 erstellt sind. Für den Fall, daß die Platte 5 aus einem Gußteil besteht, ist es auch vorstellbar, die Streben 6 an die Platte 5 anzugießen, um die vorteilhafte Einstükkigkeit zu gewährleisten. Die Verstrebungen 6 sorgen für die nötige Biegesteifigkeit der Platte 5, damit diese dem Druck des Wassers standhält, wobei die Platte 5 trotzdem relativ dünnwandig und damit leichtbauend gefertigt werden kann. Dies ist wichtig, da die Dichtungsvorrichtung 4 in der Regel von Hand in die einzelnen Gebäudeöffnungen 2 einzusetzen ist.

Am Außenumfang 7 der Platte 5 ist eine umlaufende Felge 8 gehalten, die als Aufnahme für einen Schlauch 9 dient. Der Schlauch 9 besteht aus elastomerem Material und ist innenseitig mit einem Gas, insbesondere Druckluft, füllbar. Damit der Schlauch 9 eine ausreichende Anpassung an unterschiedlich dimensionierte Gebäudeöffnungen 2 realisieren kann, steht dieser mindestens um die Hälfte seines Querschnitts über die Felge 8 über. Ist die lichte Weite der Gebäudeöffnung 2 etwas geringer, so kann die Felge 8 trotzdem problemlos in diese eingesetzt werden. In diesem Fall reicht eine entsprechend geringere Gasmenge im Schlauch aus, um eine korrekte Abdichtung zu erzielen.

Der Schlauch 9 ist über ein axial zu diesem ausgerichtetes Ventil 10 befüllbar. Durch Befüllen des Schlauches 9 mit komprimiertem Gas, insbesondere Druckluft, wird erreicht, daß sich dieser fest an die Innenwandungen der Gebäudeöffnung 2 andrückt, so daß sich eine dichte Anlage des Schlauches 9 an der Gebäudeöffnung 2 ergibt.

Um zu verhindern, daß der Wasserdruck die gesamte Dichtungsvorrichtung 4 in die Gebäudeöffnung 2 hineindrückt, sind an der Platte 5 und/oder an der Felge 8 Winkel 11 befestigt, die den Türholm 1 außenseitig übergreifen. Zur einfacheren Montage und Lagerung der Dichtungsvorrichtung 4 ist insbesondere daran gedacht, die Winkel 11 über lösbare Befestigungsmittel 12, insbesondere Schrauben, an der Platte 5 zu halten.

In dem in Figur 1 dargestellten Anwendungsfall reicht eine Dichtungsvorrichtung 4 nicht aus, um die gesamte Gebäudeöffnung 2 dicht zu verschließen. Reicht das zu erwartende Hochwasser jedoch höchstens bis zur Oberkante 13 der Dichtungsvorrichtung 4, so ist trotzdem eine ausreichend sichere Abdichtung der Gebäudeöffnung 2 gewährleistet. Bei extremem Hochwasser kann es jedoch vorkommen, daß eine Verdichtungsvorrichtung 4 zum Schutz des Gebäudes 3 nicht mehr ausreicht. In diesem Fall ist es erforderlich, die Gebäudeöffnung 2 mit mehreren, im vorliegenden Ausführungsbeispiel zwei Dichtungsvorrichtungen 4 zu verschließen.

Um zu verhindern, daß sich die beiden Schläuche 9 der Dichtungsvorrichtungen 4 gegenseitig wegdrücken, was zu einer undichten Verbindung zwischen beiden Schläuchen 9 führen würde, ist an der unteren Dichtungsvorrichtung 4 oberseitig eine Gegendruckplatte 14 gehalten. Diese Gegendruckplatte 14 übergreift den Schlauch 9 oberseitig, so daß der untere Schlauch 9 in seinem oberen Bereich und der obere Schlauch 9 in seinem unteren Bereich einerseits gegen die Felge 8 und andererseits gegen die Gegendruckplatte 14 drückt. Auf diese Weise wird erreicht, daß die beiden Schläuche 9 ausschließlich in radialer Richtung drücken, so daß keine, die Dichtigkeit der Verbindung beeinträchtigenden Scherkräfte auftreten können. Um. die gleiche Dichtungsvorrichtung 4 einerseits als unteren und andererseits als oberen Abschluß der Gebäudeöffnung 2 einsetzen zu können, ist vorgesehen, daß die Gegendruck:platte 14 über weitere lösbare Befestigungsmittel 12 an der Felge 8 bzw. an der Platte 5 gehalten ist. Damit kann die Gegendruckplatte 14 sehr leicht von der Dichtungsvorrichtung 4 getrennt werden, um sie als oberen Abschluß der Gebäudeöffnung 2 einzusetzen.

Um auch im Bereich der Gegendruckplatte 14 eine ausreichend sichere Abdichtung der Gebäudeöffnung 2 sicherzustellen, weist die Gegendruckplatte 14 stirnseitig je einen Dichtungskörper 24 auf. Dieser Dichtungskörper 24 besteht aus einem elastomerem Material mit einer Shorehärte von weniger als 10, so daß beide Dichtungskörper 24 dichtend an der Gebäudeöffnung 2 anliegen. Die Gegendruckplatte 14 ist derart ausgebildet, daß die beiden Schläuche 9 der Dichtungsvorrichtungen 4 im druckbeaufschlagten Zustand gegen die Dichtungskörper 24 drücken und diese komprimieren. Damit werden die Dichtungskörper 24 noch stärker gegen die Gebäudeöffnung 2 gedrückt, um auch im Bereich der Gegendruckplatte 14 einen ausreichend dichten Abschluß der Gebäudeöffnung 2 zu gewährleisten.

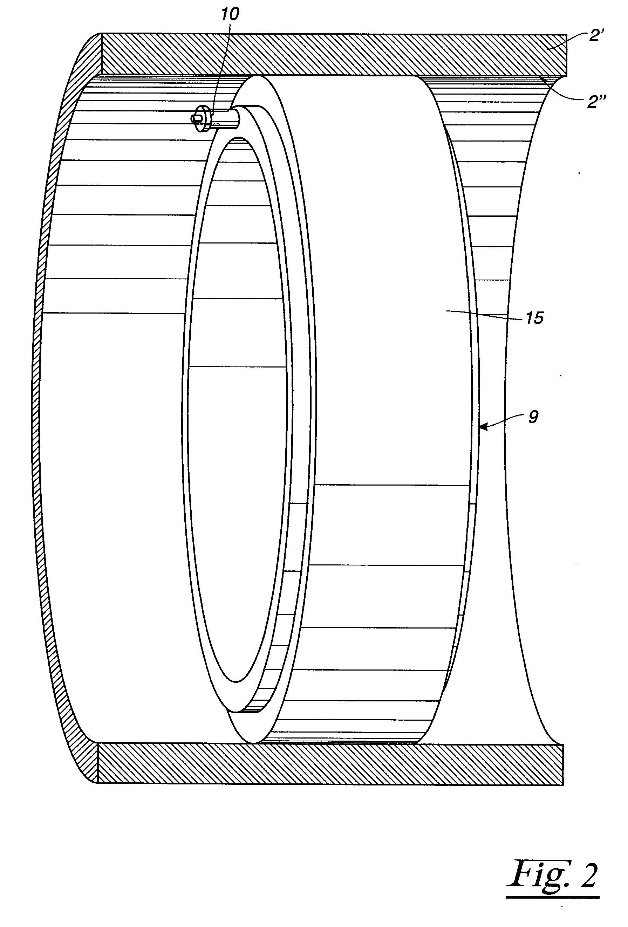

Figur 2 zeigt eine räumliche Darstellung des Schlauches 9 der Dichtungsvorrichtung 4, wobei dieser von der Felge 8 abgenommen ist. Der Schlauch 9 weist im wesentlichen eine hohlzylinderförmige Außenkontur auf, wobei er zur Aufnahme der Druckluft mit einem nicht sichtbaren Hohlraum ausgebildet ist. Der Schlauch 9 läßt sich bei Verwendung auf kreisrunden Felgen auch zum Abdichten von Rohrleitungen einsetzen. Dies ist insbesondere zum Überprüfen der Dichtigkeit einer Rohrleitung 2' bzw. einer Rohrleitungsverbindung wichtig. In diesem Fall ist es nicht erforderlich, die Felge der Dichtungsvorrichtung durch eine Platte zu verschließen. Vielmehr reicht es aus, zwei Dichtungsvorrichtungen 4 an beiden Enden eines Rohrstücks anzubringen, so daß sich zwischen den Schläuchen 9, dem Rohrstück und der zu prüfenden Rohrleitung 2' ein Prüfraum ergibt, dessen Dichtigkeit leicht überprüft werden kann. Insbesondere bei Kanalrohren ist auf diese Weise auch während des Prüfvorgangs ein ungehinderter Durchfluß durch den Kanal möglich.

Um eine dichte Anlage des Schlauches 9 an der Gebäudeöffnung 2 bzw. einer Rohrinnenwandung 2" zu erzielen, ist am Außenumfang des Schlauches 9 ein Dichtstreifen 15 vorgesehen, der eine wesentlich geringere Shorehärte als der Schlauch 9 aufweist. Dieser Dichtstreifen 15 ist vorzugsweise an die Schlauchaüßenwandung anvulkanisiert, um eine dichte Verbindung zwischen dem Dichtstreifen 15 und dem Schlauch 9 zu erzielen. Der Dichtstreifen 15 läßt sich im Gegensatz zum Schlauch 9 besonders leicht verformen, so daß er sich engstmöglich an Unebenheiten der Gebäudeöffnung 2 bzw. der Rohrleitungsinnenseite anlegt.

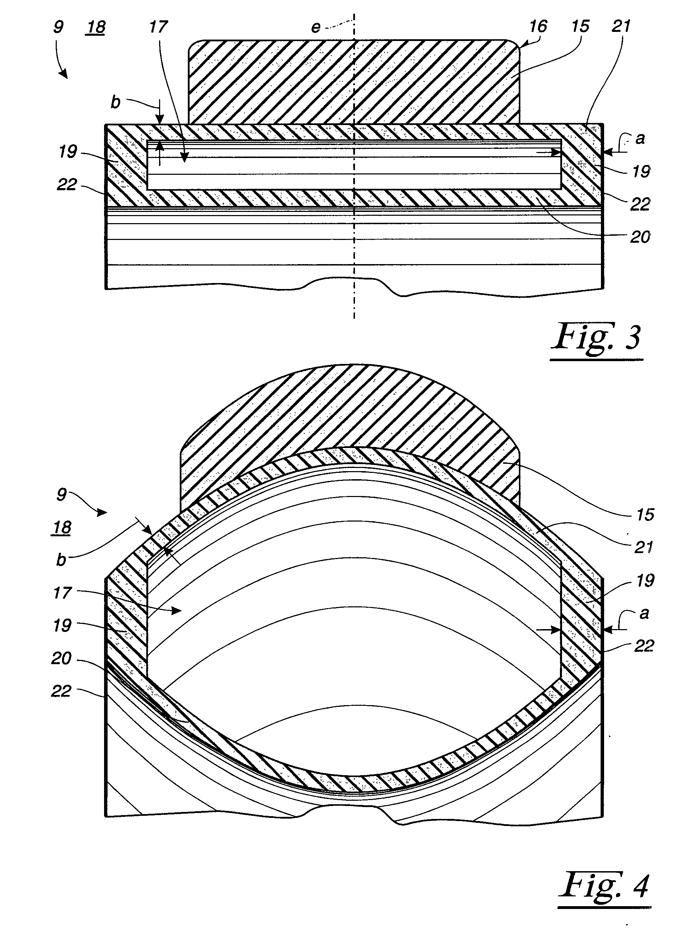

Figur 3 zeigt eine Schnittdarstellung durch den Schlauch 9 gemäß Figur 2, wobei der Dichtstreifen 15 abgerundete Kanten 16 aufweist. Die Kantenausbildung des Dichtstreifens 15 hat dabei keinerlei Einfluß auf die Funktionalität der Dichtvorrichtung 4. Der Schlauch 9 weist einen im wesentlichen rechteckförmigen Querschnitt mit rechteckförmigem Hohlraum 17 auf, der mit komprimiertem Gas, insbesondere mit Druckluft füllbar ist.

In der in Figur 3 dargestellten entspannten Lage herrscht im Hohlraum 17 der gleiche Druck wie in einem Außenraum 18, so daß im Schlauch 9 keinerlei elastischen Verformungen herrschen. Der Schlauch 9 besitzt in seinen, sich radial zur Ringebene ε erstreckenden Bereichen 19 eine größere Wandstärke a als im Innenbereich 20 und im Außenbereich 21. Der Innenbereich 20 bzw. Außenbereich 21 erstreckt sich axial zur Ringebene ε, wobei der Schlauch 9 dort eine Wandstärke b besitzt, um elastische Verformungen zuzulassen. Zusätzlich weist der Schlauch 9 im sich radial zur Ringebene ε erstreckenden Bereich 19 außenseitig eine Verstärkung 22 auf, die vorzugsweise von einem zugfesten Material gebildet ist. Insbesondere ist daran gedacht, daß die Verstärkung 22 von einem Textilfasergeflecht gebildet ist. Diese Verstärkung 22 sorgt für eine erhöhte Formstabilität des Bereichs 19 des Schlauches 9.

Figur 4 zeigt den Schlauch 9 gemäß Figur 3, wobei der Hohlraum 17 mit Druckluft gefüllt ist. Aufgrund der herrschenden Druckdifferenz zwischen dem Innenraum 17 und dem Außenraum 18 hat sich der Schlauch 9 gegenüber der Figur 3 ausgedehnt. Die Dehnung erfolgt dabei im wesentlichen im Innen- 20 und Außenbereich 21 des Schlauches 9, so daß der Schlauch 9 insgesamt eine in etwa ovale Gestalt annimmt. Die größere Wandstärke a und die Verstärkung 22 im radialen Bereich des Schlauches 9 führen zu einer Stabilisierung des Schlauches 9 in diesem Bereich, so daß sich der Innen- 20 und Außenbereich 21 ausschließlich konvex nach außen wölben. Dadurch wird verhindert, daß sich der Schlauch 9 wulstartig in axialer Richtung ausstülpt, was zu Beschädigungen des Schlauches 9 der Felge 8 führen könnte.

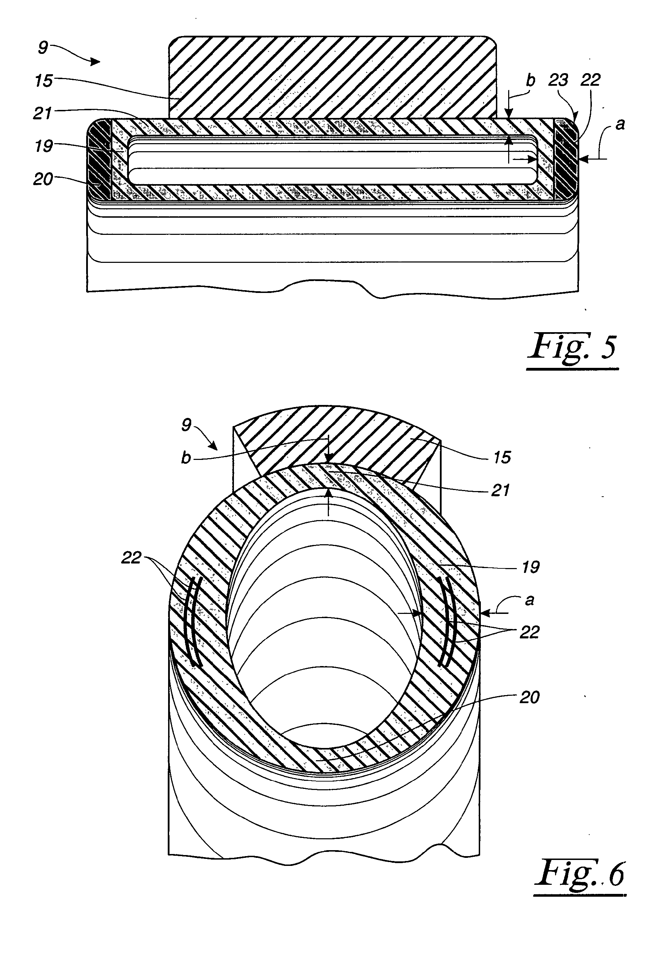

Figur 5 zeigt eine Schnittdarstellung einer alternativen Ausführungsform eines Schlauches 9 gemäß Figur 3. Im Radialbereich 19 ist am Schlauch 9 eine Verstärkung 22 anvulkanisiert, die aus elastomerem Material mit größerer Shorehärte als der übrige Schlauch 9 besteht. Damit kann der verstärkungsfreie Teil des Schlauches 9 mit annähernd konstanter Wandstärke b hergestellt werden, was die Fertigung des Schlauches 9 vereinfacht. Grundsätzlich ist es jedoch auch vorstellbar, den Schlauch 9 auch in seinem verstärkungsfreien Radialbereich 19 mit größerer Wandstärke als im Außenwandbereich 21 herzustellen.

Durch die größere Shorehärte der Verstärkung 22 ergibt sich gegenüber dem Ausführungsbeispiel gemäß Figur 3 eine noch bessere Formstabilisierung des Schlauches 9 im Radialbereich 19, so daß ggf. die Wandstärke a in diesem Bereich entsprechend reduziert werden könnte. In Abweichung vom Ausführungsbeispiel gemäß Figur 3 ist der Schlauch in seinen Kantenbereichen 23 gerundet ausgebildet, so daß sich beim Ausdehnen des Schlauches eine bessere Verteilung der hieraus resultierenden elastischen Deformationen ergibt.

Schließlich zeigt Figur 6 eine weitere alternative Ausführungsform eines Schlauches 9, der im Gegensatz zu den vorbeschriebenen Ausführungsformen einen im wesentlichen elliptischen Querschnitt aufweist. Grundsätzlich wäre es auch denkbar, den Schlauchquerschnitt kreisförmig oder in Ovalform auszubilden, ohne die wesentliche Funktion des Schlauches hierdurch zu verändern. Durch die elliptische Ausbildung des Schlauches 9 ergibt sich eine besonders günstige Anpassung des Schlauches 9 an teiltorusförmig geformte Felgen. Im Gegensatz zu den vorgenannten Ausführungsbeispielen geht die Wandstärke a im Radialbereich kontinuierlich in die geringere Wandstärke b des Innen-20 bzw. Außenbereichs 21 über. Dies bewirkt eine günstige Kräfteverteilung innerhalb des Schlauches 9 bei Einwirkung von deformierenden Kräften.

Im Radialbereich 19 sind außerdem Verstärkungen 22 eingelagert, die von zugfesten Fasern gebildet sein können. Damit wird eine zusätzliche Stabilisierung der Radialbereiche 19 erzielt. Alternativ zum Ausführungsbeispiel gemäß Figur 6 könnte die Verstärkung 22 auch an der Schlauchoberfläche angebracht sein.

### Bezugszeichenliste

- 1: Türholm
- 2: Gebäudeöffnung
- 2': Rohrleitung
- 2": Rohrinnenwandung
- 3: Gebäude
- 4: Dichtungsvorrichtung
- 5: Platte
- 6: Verstrebung
- 7: Außenumfang der Platte
- 8: Felge
- 9: Schlauch
- 10: Ventil
- 11: Winkel
- 12: Befestigungsmittel
- 13: Oberkante der Dichtungsvorrichtung
- 14: Gegendruckplatte
- 15: Dichtstreifen
- 16: Kante des Dichtstreifens
- 17: Hohlraum
- 18: Außenraum
- 19: radialer Bereich des Schlauches
- 20: Innenbereich des Schlauches
- 21: Außenbereich des Schlauches
- 22: Verstärkung
- 23: Kantenbereich des Schlauches
- 24: Dichtungskörper
- ε: Ringebene des Schlauches
- a: Wandstärke im Radialbereich
- b: Wandstärke im Innenbereich

## Patentansprüche

1. Dichtungsvorrichtung, insbesondere zum innenseitigen Abdichten von Rohrleitungen (2') und/oder Gebäudeöffnungen (2), wobei die Dichtungsvorrichtung (4) einen Schlauch (9) mit einer ringförmigen Wandung aus elastomerem Material aufweist, die einen geschlossenen, mit einem Gas füllbaren Hohlraum (17) einschließt, **dadurch gekennzeichnet, daß** der Schlauch (9) ausschließlich im sich im wesentlichen radial zur Ringebene (ε) erstreckenden Bereich (19) mindestens eine Verstärkung (22) aus einem Material mit höherer Zugfestigkeit als die Schlauchwandung aufweist.

2. Dichtungsvorrichtung nach Anspruch 1, **dadurch gekennzeichnet, daß** die Schlauchwandung im entspannten Zustand einen im wesentlichen rechteckförmigen, elliptischen oder ovalen Querschnitt mit einer im wesentlichen rechteckförmigen, elliptischen oder ovalen, den Hohlraum (17) bildenden Öffnung aufweist, wobei die Schlauchwandung mit einer Längsseite ihres Querschnitts zur Ringinnenseite (20) gerichtet ist, und sich die Schmalseiten (19) im wesentlichen radial zur Ringebene (ε) erstrecken.

3. Dichtungsvorrichtung nach Anspruch 1 oder 2, **dadurch gekennzeichnet, daß** die Schlauchwandung im Bereich ihrer zur Ringinnen- (20) und/oder -außenseite (21) gerichteten Flächen eine geringere Wandstärke (b) und/oder geringere Shorehärte als im sich im wesentlichen radial zur Ringebene (ε) erstreckenden Bereich (19) aufweist.

4. Dichtungsvorrichtung nach mindestens einem der Ansprüche 1 bis 3, **dadurch gekennzeichnet, daß** die Verstärkung (22) Glas-, Karbon- und/oder Textilfasern aufweist.

5. Dichtungsvorrichtung nach Anspruch 4, **dadurch gekennzeichnet, daß** sich die Fasern im wesentlichen radial zur Ringebene (ε) des Schlauches (9) erstrecken oder zu einem Geflecht geformt sind.

6. Dichtungsvorrichtung nach mindestens einem der Ansprüche 1 bis 5, **dadurch gekennzeichnet, daß** an der Ringaußenseite (21) der Schlauchwandung mindestens ein Dichtstreifen (15) aus elastomerem Material angebracht ist, der eine geringere Shorehärte als die Schlauchwandung aufweist.

7. Dichtungsvorrichtung nach mindestens einem der Ansprüche 1 bis 6, wobei der Schlauch (9) mindestens ein Ventil (10) aufweist, **dadurch gekennzeichnet, daß** das Ventil (10) im sich im wesentlichen radial zur Ringebene (ε) des Schlauches (9) erstreckenden Bereich (19) vorgesehen ist.

8. Dichtungsvorrichtung nach mindestens einem der Ansprüche 1 bis 7 oder nach dem Oberbegriff des Anspruchs 1, wobei der Schlauch (9) mit seiner Ringinnenseite (20) auf einer Felge (8) aufgezogen ist, die innenseitig mit einer Platte (5) verschlossen ist, **dadurch gekennzeichnet, daß** an der Felge (8) und/oder der Platte (5) eine den Schlauch (9) im Teilbereich seines Außenumfangs übergreifende Gegendruckplatte (14) gehalten ist, wobei sich der Schlauch (9) innenseitig an die Felge (8) und außenseitig an die Gegendruckplatte (14) preßt.

9. Dichtungsvorrichtung nach Anspruch 8, **dadurch gekennzeichnet, daß** an der Gegendruckplatte (14) stirnseitig mindestens ein Dichtungskörper (24) vorgesehen ist.

10. Dichtungsvorrichtung nach Anspruch 9, **dadurch gekennzeichnet, daß** der Dichtungskörper (24) aus elastomerem Material besteht und vom Schlauch (9) komprimierbar ist.
